# EUROPÄISCHE PATENTSCHRIFT

(11) **EP 3 451 202 B1**
(45) Veröffentlichungstag und Bekanntmachung des Hinweises auf die Patenterteilung: **24.02.2021**
(21) Anmeldenummer: 17188999.1
(22) Anmeldetag: 01.09.2017
(51) Int. Cl.: G06F 8/35, G05B 17/00, G06F 9/54, G06F 8/41, G05B 17/02, G06F 117/08, G06F 30/15, G06F 30/20

(54) **VERFAHREN ZUM ERZEUGEN EINES AUF EINEM TESTGERÄT AUSFÜHRBAREN MODELLS EINES TECHNISCHEN SYSTEMS UND TESTGERÄT**
METHOD FOR GENERATING A MODEL OF A TECHNICAL SYSTEM WHICH CAN BE RUN ON A TEST DEVICE AND A TEST DEVICE
PROCÉDÉ DE GÉNÉRATION D'UN MODÈLE D'UN SYSTÈME TECHNIQUE EXÉCUTABLE SUR UN APPAREIL D'ESSAI ET APPAREIL D'ESSAI

(43) Veröffentlichungstag der Anmeldung: 06.03.2019
(73) Patentinhaber: dSPACE digital signal processing and control engineering GmbH, 33102 Paderborn (DE)
(72) Erfinder: Meyer, Björn, 33106 Paderborn (DE); Zacharias, Irina, 33102 Paderborn (DE)

(56) Entgegenhaltungen:
- EP-A1- 1 489 531
- DE-A1-102011 101 920
- DE-A1-102012 108 490
- US-A1- 2004 078 180

## Beschreibung

Die vorliegende Erfindung betrifft die Entwicklung von Steuergeräten, wie sie z.B. in der Automobilindustrie oder in der Luftfahrtindustrie zur Steuerung von technischen Systemen, wie z.B. Motoren oder Bremsen, verwendet werden. Insbesondere betrifft die vorliegende Erfindung Testgeräte, die im Entwicklungsprozess des Steuergeräts verwendet werden.

Die Entwicklung von Steuergeräten ist zu einem hochkomplexen Prozess geworden. So sollen neue Steuergeräte bzw. neue Steuerfunktionen so früh wie möglich im Entwicklungsprozess getestet werden, um die generelle Funktionalität zu überprüfen und die weitere Entwicklungsrichtung vorzugeben. Gegen Ende des Entwicklungsprozesses ist es wichtig, das schon weit entwickelte Steuergerät möglichst umfassend zu testen, um aufgrund der Testergebnisse notwendige Modifikationen vorzunehmen, bevor das Steuergerät in Benutzung bzw. in Serienfertigung geht, so dass es im späteren Betrieb unter allen Umständen wie gewünscht arbeitet.

Zu einem recht späten Stadium des Entwicklungsprozesses kommen sog. Hardware-in-the-Loop-Simulatoren (HIL-Simulatoren) zum Einsatz. Solche HIL-Simulatoren enthalten ein Modell des zu steuernden technischen Systems, wobei das Modell in Software vorliegt. Zusätzlich kann der HIL-Simulator weitere Modelle von technischen Systemen, die sich in der Umgebung des Steuergeräts und des zu steuernden technischen Systems befinden und mit dem Steuergerät und/oder dem zu steuernden technischen System zusammenwirken, enthalten. Der HIL-Simulator enthält weiterhin eine Eingabe/Ausgabe-Schnittstelle, an die das schon weit entwickelte, bereits in Hardware gegenständlich vorhandene Steuergerät, auch als gerätemäßige Implementierung des Steuergeräts bezeichnet, angeschlossen werden kann. In verschiedenen Simulationsdurchläufen kann nun die Funktionalität des Steuergeräts getestet werden, wobei die Reaktionen des Modells des zu steuernden technischen Systems auf die Signale des Steuergeräts sowie die Reaktionen des Steuergeräts auf von dem Modell des zu steuernden technischen Systems vorgegebene Ereignisse beobachtet werden können. Gegebenenfalls kann auch das Verhalten weiterer technischer Systeme aus der Umgebung von Steuergerät und zu steuerndem technischen System beobachtet werden. Dabei können sowohl der normale Betrieb als auch Fehler in dem zu steuernden technischen System als auch Fehler in dem Steuergerät als auch Fehler in der Kommunikation zwischen Steuergerät und zu steuerndem System, wie z.B. Kabelbrücke, als auch Fehler in der Stromversorgung, wie z.B. Kurzschlüsse, simuliert werden. Der HIL-Simulator ist ein Beispiel eines für die Steuergerätentwicklung eingerichteten Testgeräts.

Der Aufwand zur Vorbereitung einer HIL-Simulation ist im Allgemeinen sehr hoch, insbesondere wenn eine Mehrzahl von Teilmodellen in dem HIL-Simulator zusammenwirkt. In Vorbereitung der Simulation wird die Kommunikation zwischen den Teilmodellen konfiguriert. Nach dem Kompilieren der Teilmodelle ergibt sich dann für das an den HIL-Simulator angeschlossene Steuergerät ein ganzheitliches technisches System, mit dem das Steuergerät interagieren kann. Der hohe Aufwand diese Prozesses ist insbesondere dann relevant bzw. störend, wenn verschiedene Varianten getestet werden sollen bzw. wenn einzelne Teile des Modells des technischen Systems getauscht werden sollen.

Aus dem Stand der Technik bekannt ist die Offenlegungsschrift DE102012108490A1, sie offenbart ein Verfahren zur flexiblen automatisierten Verbindung von Teilmodellen eines Gesamtmodells unter Berücksichtigung einer gegebenen Systemarchitektur in einer Simulationsumgebung. Der Schrift liegt die Aufgabe zugrunde, ein Verfahren zur Handhabung von Teilmodellen eines Gesamtmodells in einer Simulationsumgebung anzugeben, das einen reduzierten Aufwand bei Modellierung, Simulation und Implementation hat und möglichst unempfindlich gegenüber Modellierungsfehlern zu sein.

Aus der DE102011101920A1 ist ein Fahrzeugsimulationssystem bekannt, umfassend ein Compiler-Modul, ein Parser-Modul, ein Wrapper-Modul und ein Modellerstellungsmodul. Das Compiler-Modul erzeugt mit einem Betriebssystem kompatiblen Objektcode, auf Grundlage von Sourcecode, der mittels eines Fahrzeugsteuermoduls ausgeführt werden kann und der mit einem weiteren Typ von Betriebssystem kompatibel ist.

Bekannt ist auch die EP1489531A1, welche ein Simulationssystem zu computerimplementierten Verifikation eines Steuerungssystems offenbart. Das Simulationssystem umfasst eine Vielzahl Prozesse mit entsprechenden Speicher- und Interface-Module, wobei die Module unterschiedliche Speicheradressen für die Kommunikation zwischen den Modulen aufweisen.

Die US-Veröffentlichungsschrift US2004/0078180A1 offenbart eine Methode zur automatischen Zerlegung eines dynamischen Systems in separate Untermodule und die exklusive Ausführung dieser Untermodule auf unterschiedlichen Zielplattformen.

Demzufolge wäre es wünschenswert, die Erstellung des auf dem Testgerät ausführbaren Modells des technischen Systems flexibler zu gestalten. Außerdem wäre es wünschenswert, ein Testgerät zur Verfügung zu stellen, das eine solche flexiblere Erstellung des auf dem Testgerät ausführbaren Modells ermöglicht.

Beispielhafte Ausführungsformen der Erfindung umfassen ein Verfahren zum Erzeugen eines auf einem Testgerät ausführbaren Modells eines technischen Systems, wobei das Testgerät und das ausführbare Modell zum echtzeitfähigen Testen eines an das Testgerät angeschlossenen Steuergeräts ausgebildet sind und wobei das ausführbare Modell aus einer Mehrzahl von miteinander kommunizierenden ausführbaren Teilmodellen aufgebaut ist, wobei jedes der ausführbaren Teilmodelle einen separaten Adressraum besitzt und/oder bei Durchführung eines Tests eines an das Testgerät angeschlossenen Steuergeräts auf einem separaten Prozessor oder separatem Prozessorkern ausgeführt wird. Das Verfahren weist dabei die folgenden Schritte auf, welche nach dem Kompilieren von hochsprachlichen Teilmodellen in die ausführbaren Teilmodelle ausgeführt werden: (a) für jedes der Mehrzahl der ausführbaren Teilmodelle, Identifizieren von Kommunikationseigenschaften des jeweiligen ausführbaren Teilmodells; (b) Zugreifen auf Kommunikationsdefinitionen für die Kommunikation zwischen den ausführbaren Teilmodellen; (c) Konfigurieren von Kommunikationsschnittstellen der Mehrzahl der ausführbaren Teilmodelle auf Basis der Kommunikationseigenschaften der ausführbaren Teilmodelle und der Kommunikationsdefinitionen für die Kommunikation zwischen den ausführbaren Teilmodellen; und (d) Einrichten mindestens einer echtzeitfähigen Kommunikationsverbindung zwischen den ausführbaren Teilmodellen auf Basis der Kommunikationseigenschaften der ausführbaren Teilmodelle und der Kommunikationsdefinitionen für die Kommunikation zwischen den ausführbaren Teilmodellen.

Das erfindungsgemäße Verfahren ermöglicht das Einrichten von Kommunikationsverbindungen zwischen den Teilmodellen nach dem Kompilieren der Teilmodellen, d.h. in einem Stadium, in dem die Teilmodelle schon in kompilierter Form vorliegen, so dass sie auf dem Testgerät ausführbar sind. Gegenüber früheren Ansätzen, bei denen das Kompilieren der Teilmodelle und das Erstellen des ausführbaren Modells nach dem Einrichten der Kommunikation zwischen den Teilmodellen durchgeführt wurde, eliminiert das erfindungsgemäße Verfahren die Notwendigkeit, die Teilmodelle bei vergleichsweise kleinen Änderungen der Gesamtsimulation neu zu kompilieren. Zum Beispiel können einzelne Teilmodelle durch ähnliche Teilmodelle ausgetauscht werden oder es können bezüglich der Kommunikation zwischen den Teilmodellen unterschiedliche Varianten getestet werden, ohne dass die gleichbleibenden Teilmodelle neu kompiliert werden müssen. Ein beschleunigtes Handhaben von unterschiedlichen Simulationsvarianten bzw. ein beschleunigter Austausch von Teilmodellen wird somit ermöglicht.

Das Einrichten von Kommunikationsverbindungen zwischen den Teilmodellen beruht auf Kommunikationseigenschaften auf der einen Seite und Kommunikationsdefinitionen auf der anderen Seite. Gemeinsam beinhalten die Kommunikationseigenschaften und die Kommunikationsdefinitionen ausreichend Information, um die Kommunikation zwischen den ausführbaren Teilmodellen einzurichten. Es ist über die Kommunikationseigenschaften hinaus nicht erforderlich, den genauen Aufbau der Teilmodelle zu kennen, um die Kommunikationsverbindungen einzurichten. Somit stört es für das Einrichten der Kommunikationsverbindungen nicht, dass die Teilmodelle als ausführbare Kompilate vorliegen und nicht erst mit dem Wissen über die gewünschten Kommunikationsverbindungen kompiliert werden.

Der Begriff Kommunikationseigenschaften bezeichnet die einem Teilmodell inhärente Konstitution bezüglich seiner Kommunikationsfähigkeiten. Der Begriff Kommunikationseigenschaften kann beispielsweise die Eigenschaften von Variablen umfassen, welche in dem jeweiligen Teilmodell vorliegen und zur Übermittlung an andere Teilmodelle zur Verfügung stehen. Zu den Kommunikationseigenschaften können dabei die Genauigkeit einer solchen Variablen, z.B. bestimmt durch Datentyp und Datenbreiten, sowie die Frequenz der Erstellung eines entsprechenden Werts der Variablen gehören. Die Kommunikationseigenschaften können auch die Kommunikationsrichtung, d.h. die Eignung des Teilmodells als Sender bzw. Empfänger für eine bestimmte Variable, sowie die Zuordnung zu inneren Prozessen innerhalb eines Teilmodells beinhalten. Dies wird unten im Detail beschrieben.

Der Begriff Kommunikationsdefinitionen bezieht sich demgegenüber auf die Verknüpfung von mehreren Teilmodellen. So können die Kommunikationsdefinitionen zum Beispiel eine Festlegung der Kommunikationspartner, d.h. eine Festlegung von zwei oder mehr bezüglich eines bestimmten Datenaustauschs zu verbindenden Teilmodellen, beinhalten. Auch ist es möglich, dass über die Kommunikationsdefinitionen weitere Eigenarten der Kommunikation spezifiziert werden, wie z.B. die Bündelung von Daten oder die Art der Berücksichtigung von übertragenen Daten auf Empfängerseite. Auch dies wird unten im Detail beschrieben. Die Kommunikationsdefinitionen können für eine gewünschte Simulation vom Benutzer festgelegt werden und/oder durch entsprechende Dateien/Algorithmen festgelegt werden.

Auf Basis der Kommunikationseigenschaften und der Kommunikationsdefinitionen werden Kommunikationsschnittstellen konfiguriert und Kommunikationsverbindungen eingerichtet. Der Begriff Kommunikationsschnittstelle beschreibt dabei einen Kommunikationspunkt eines ausführbaren Teilmodells, über den das ausführbare Teilmodell zur Laufzeit der Simulation mit anderen Teilmodellen interagieren kann. Demgegenüber betrifft der Begriff Kommunikationsverbindung den Datenaustausch zwischen Teilmodellen während der Laufzeit der Simulation. Dieser Datenaustausch findet zwischen separaten Adressräumen und/oder zwischen separaten Prozessoren bzw. separaten Prozessorkernen statt.

Die ausführbaren Teilmodelle können in Binärcode vorliegen. Es ist auch möglich, dass die ausführbaren Teilmodelle in Maschinen-Code, d.h. in Assembler, vorliegen. Die ausführbaren Teilmodelle liegen in einem Format vor, das unmittelbar auf einem Prozessor ausführbar ist. Gegenüber einer Beschreibung der Teilmodelle in einer hochsprachlichen Programmiersprache sind die ausführbaren Teilmodelle kompiliert.

Gemäß einer weiteren Ausführungsform beinhaltet der Schritt des Identifizierens der Kommunikationseigenschaften des jeweiligen ausführbaren Teilmodells das Analysieren einer mit den jeweiligen ausführbaren Teilmodell assoziierten Metadatei. Das Analysieren einer Metadatei, die mit dem jeweiligen ausführbaren Teilmodell assoziiert ist und Daten bezüglich der Kommunikationseigenschaften des Teilmodells enthält, stellt eine effiziente Möglichkeit des Identifizierens der Kommunikationseigenschaften dar. Die Metadatei kann die Kommunikationseigenschaften unmittelbar beinhalten. Es ist auch möglich, dass die Metadatei Daten enthält, aus denen auf die Kommunikationseigenschaften rückgeschlossen werden kann. Es ist zusätzlich/alternativ auch möglich, das jeweilige ausführbare Teilmodell zu Analysieren und daraus die Kommunikationseigenschaften zu extrahieren. Es ist weiterhin möglich, das hochsprachliche Teilmodell, das die Basis für das ausführbare Teilmodell gebildet hat, zu analysieren und daraus die Kommunikationseigenschaften des ausführbaren Teilmodells zu extrahieren. Es ist daneben auch möglich, dass die Kommunikationseigenschaften zumindest teilweise durch Benutzer-Eingaben festgelegt werden.

Gemäß einer weiteren Ausführungsform weist das Verfahren weiterhin den Schritt des Erstellens von mindestens einem ausführbaren Teilmodell durch Kompilieren und des Erzeugens von mindestens einer Metadatei, assoziiert mit dem mindestens einen ausführbaren Teilmodell, im Zuge des Kompilierens auf. In anderen Worten, die mit einem gegebenen ausführbaren Teilmodell assoziierte Metadatei ist im Zuge des Kompilierens des hochsprachlichen Teilmodells erstellt worden. Somit können das Erstellen eines ausführbaren Teilmodells und das Zusammenstellen der für das spätere Einrichten von Kommunikationsverbindungen relevanten Kommunikationseigenschaften effizient kombiniert werden.

Gemäß einer weiteren Ausführungsform beinhaltet der Schritt des Zugreifens auf Kommunikationsdefinitionen für die Kommunikation zwischen den ausführbaren Teilmodellen das Empfangen mindestens einer Benutzereingabe von Kommunikationsdefinitionen. In anderen Worten, die Kommunikationsdefinitionen können benutzerdefiniert sein. Auf diesem Weg können während der Vorbereitung der Simulation ausgewählte Kommunikationswege definiert werden bzw. es können Spezifikationen für bestimmte Kommunikationswege vorgenommen werden, wobei durch das Fachwissen des Benutzers und die entsprechenden Kommunikationsdefinitionen eine effiziente und sinnvolle spätere Simulation gefördert werden kann. Wie oben bereits angedeutet, ist es auch möglich, die Kommunikationsdefinitionen durch entsprechende Dateien beziehungsweise durch entsprechende Algorithmen bereitzustellen.

Gemäß einer weiteren Ausführungsform ist das auf dem Testgerät ausführbare Modell des technischen Systems ein Modell eines zu steuernden technischen Systems. In anderen Worten, das Modell des technischen Systems ist ein Modell eines technischen Systems, das von einem Steuergerät im späteren Betrieb gesteuert wird. Dabei kann das Modell als Ganzes von dem an das Testgerät angeschlossenen Steuergerät gesteuert werden. Es ist aber auch möglich, dass das Modell des technischen Systems einen zu steuernden Teil aufweist und weitere Teile aufweist, die nicht oder nicht unmittelbar von dem angeschlossenen Steuergerät gesteuert werden. Zum Beispiel kann das ausführbare Modell des technischen Systems ein Modell einer Kombination eines Motors und eines Getriebes sein. Das für die Simulation an das Testgerät angeschlossene Steuergerät kann beispielsweise ein Motorsteuergerät oder ein Getriebesteuergerät oder ein kombiniertes Motor- und Getriebesteuergerät sein. Die ausführbaren Teilmodelle können Teilsystemen des zu steuernden technischen Systems entsprechen. Im vorliegenden Beispiel kann ein ausführbares Teilmodell ein Modell des Motors sein, während ein anderes ausführbares Teilmodell ein Modell des Getriebes ist.

Gemäß einer weiteren Ausführungsform ist die mindestens eine echtzeitfähige Kommunikationsverbindung zwischen den ausführbaren Teilmodellen für eine konsistente Datenübertragung mittels Konsistenzpuffern und Kommunikationspaketen eingerichtet. Dabei bezeichnet der Begriff Kommunikationspaket eine Dateneinheit, die gemeinsam an ein als Empfänger bestimmtes ausführbares Teilmodell gerichtet ist bzw. gemeinsam an eine Sub-Komponente des als Empfänger bestimmten ausführbaren Teilmodells gerichtet ist. Diese Bündelung als Kommunikationspaket bezieht sich auf ein gemeinsames Übertragen während der Durchführung der Simulation. Demgegenüber bezieht sich der Begriff Konsistenzpuffer auf eine Dateneinheit, die dem gleichen Zeitpunkt in der simulierten Zeit entspricht. Insbesondere bezieht sich der Konsistenzpuffer auf in einem ausführbaren Teilmodell zur gleichen simulierten Zeit vorhandene Daten. Die Verwendung von Konsistenzpuffern und Kommunikationspaketen erlaubt eine effiziente Implementierung eines echtzeitfähigen Tests mit dem Simulationsgerät und eine effiziente echtzeitfähige Kommunikation der ausführbaren Teilmodelle untereinander.

Gemäß einer weiteren Ausführungsform umfassen die Kommunikationseigenschaften des jeweiligen ausführbaren Teilmodells mindestens einen der Parameter Kommunikationsrichtung, Datentyp, Datenbreite, und Zuordnung zu einem bedingt auszuführenden Bestandteil des Teilmodells. Bedingt auszuführende Bestandteile von Teilmodellen werden auch als Conditional Execution Fragments (CEFs) bezeichnet. Sie stellen Sub-Komponenten der Teilmodelle dar, wie unten im Detail beschrieben wird.

Gemäß einer weiteren Ausführungsform wird jede Kommunikationsschnittstelle der Mehrzahl der ausführbaren Teilmodelle bezüglich mindestens eines der Parameter Kommunikationsrichtung, Datentyp, Datenbreite, und Zuordnung zu einem bedingt auszuführenden Bestandteil des Teilmodells konfiguriert. Somit kann eine Kommunikationsschnittstelle in einem gegebenen ausführbaren Teilmodell so konfiguriert werden, dass sie den Kommunikationseigenschaften des jeweiligen ausführbaren Teilmodells entspricht. Das Konfigurieren von Kommunikationsschnittstellen hängt derart mit den Kommunikationsdefinitionen zusammen, dass nur für diejenigen Kommunikationseigenschaften der ausführbaren Teilmodelle Kommunikationsschnittstellen konfiguriert werden, die entsprechend den Kommunikationsdefinitionen für die angestrebte Simulation erwünscht sind.

Gemäß einer weiteren Ausführungsform umfassen die Kommunikationsdefinitionen für mindestens eine Instanz einer Kommunikation zwischen den ausführbaren Teilmodellen mindestens einen der folgenden Parameter: Festlegung von mindestens zwei miteinander kommunizierenden ausführbaren Teilmodellen, Bündelung von Kommunikationsdaten und/oder von Kommunikationsempfängern in Kommunikationspaketen, und Definition der Empfangsart, insbesondere Unterscheidung zwischen fortwährender und Ereignis-gesteuerter Empfangsart. Wie oben ausgeführt, betrifft der Begriff Kommunikationspaket eine Dateneinheit, die gemeinsam an einen oder mehrere Empfänger übertragen wird. Somit kann über die Kommunikationsdefinitionen ein effizienter Datenfluss zwischen den Teilmodellen erreicht werden. Über die Definition der Empfangsart kann für das Empfänger-Teilmodell festgelegt werden, ob die in dem Teilmodell ablaufenden Berechnungen kontinuierlich durchgeführt werden oder ob das Teilmodell lediglich auf veränderte Verhältnisse in den angeschlossenen Teilmodellen reagiert. Somit kann die Rechenlast auf ein erforderliches Maß begrenzt werden und eine insgesamt effizientere Simulation erreicht werden.

Gemäß einer weiteren Ausführungsform werden die Schritte (c) und (d) zur Laufzeit eines Test eines an das Testgerät angeschlossenen Steuergeräts durchgeführt. Insbesondere werden die Schritte (c) und (d) während einer Initialisierungsphase des Tests eines an das Testgerät angeschlossenen Steuergeräts, bzw. während der Initialisierungsphase einer echtzeitfähigen Simulation bzw. Applikation, also einmalig in der Initialisierungsphase der echtzeitfähigen Simulation, durchgeführt. Demzufolge werden das Konfigurieren von Kommunikationsschnittstellen der Mehrzahl der ausführbaren Teilmodelle und das Einrichten mindestens einer echtzeitfähigen Kommunikationsverbindung relativ kurz vor dem Durchführen der eigentlichen Simulation ausgeführt, wodurch ein Austauschen einzelner Teilmodelle bzw. ein Anpassen der Kommunikation zwischen den einzelnen Teilmodellen an eine bestimmte Simulationsvariante bis relativ kurz vor der Durchführung der Simulation möglich sind.

Gemäß einer weiteren Ausführungsform weisen die Schritte (c) und (d) auf: Erstellen einer Zuordnungs-Datei auf Basis der Kommunikationseigenschaften der ausführbaren Teilmodelle und der Kommunikationsdefinitionen für die Kommunikation zwischen den ausführbaren Teilmodellen, wobei die Zuordnungs-Datei Teilmodell-interne Informationen und Informationen für die Zwischen-Teilmodell-Kommunikation beinhaltet, und Konfigurieren der Kommunikationsschnittstellen der Mehrzahl der ausführbaren Teilmodelle sowie Einrichten der mindestens einen echtzeitfähigen Kommunikationsverbindung zwischen den ausführbaren Teilmodellen auf Basis der Zuordnungs-Datei. Eine solche Zuordnungs-Datei, auch als Mapping File bezeichnet, stellt eine gute Möglichkeit dar, die Kommunikationseigenschaften und die Kommunikationsdefinition zu verknüpfen und diese in einem wohldefinierten Format für das Konfigurieren der Kommunikationsschnittstellen und das Einrichten der mindestens einen echtzeitfähigen Kommunikationsverbindung bereitzustellen. Diese Zuordnungs-Datei erlaubt weiterhin das zeitliche Entkoppeln der Schritte (a) und (b) von den Schritten (c) und (d), so dass die Schritte (c) und (d) kurzfristig und unkompliziert vor der Durchführung der Simulation ausgeführt werden können.

Gemäß einer weiteren Ausführungsform weist die Zuordnungs-Datei für die als Empfänger fungierenden ausführbaren Teilmodelle eine Bestimmung der zu empfangenden Kommunikationspakete auf. Somit ist die während der Simulation auszuführende Kommunikation zwischen den ausführbaren Teilmodellen schon in recht konkreter Weise in der Zuordnungs-Datei festgelegt. Unter Bestimmung wird in diesem Zusammenhang verstanden, dass in der Zuordnungs-Datei definiert wird, welche Kommunikationspakete von einem bestimmten Teilmodell empfangen werden soll. Es ist nicht gemeint, dass der konkrete zu kommunizierende Inhalt bereits aus der zuordnungs-Datei ermittelt werden kann.
Gemäß einer weiteren Ausführungsform weist die Zuordnungs-Datei für die als Sender fungierenden ausführbaren Teilmodelle eine Bestimmung der gemeinsam zu übertragenden Datenblöcke auf. Dabei können die gemeinsam zu übertragenden Datenblöcke bezüglich des echtzeitfähigen Testens konsistente Daten beinhalten. Solche konsistenten Daten werden auch als Konsistenzpuffer bezeichnet. Die bezüglich des echtzeitfähigen Testens konsistenten Daten können zum gleichen Simulationsschritt gehörig sein, d.h. zum gleichen Iterationsschritt der Simulation des Modells des technischen Systems gehören. Somit kann wiederum die Zuordnungs-Datei die während der Simulation resultierende Kommunikation zwischen den ausführbaren Teilmodellen in recht konkreter Weise beschreiben. Die Umsetzung während der Initialisierung der Simulation bzw. während der Simulation selbst kann dann auf effiziente Weise erfolgen.

Beispielhafte Ausführungsformen der Erfindung umfassen weiterhin eine Kombination von einem ausführbaren Teilmodell eines auf einem Testgerät ausführbaren Modells eines zu steuernden technischen Systems und einer mit dem ausführbaren Teilmodell assoziierten Metadatei, welche Kommunikationseigenschaften des ausführbaren Teilmodells beinhaltet, wobei, bei Vorliegen von mindestens einem weiteren ausführbaren Teilmodell und auf Basis von Kommunikationsdefinitionen für die Kommunikation zwischen dem ausführbaren Teilmodell und dem weiteren ausführbaren Teilmodell, eine echtzeitfähige Kommunikationsverbindung für das ausführbare Teilmodell gemäß den Kommunikationseigenschaften der Metadatei herstellbar ist. Wie oben ausgeführt, stellt eine solche Kombination eines ausführbaren Teilmodells und einer mit dem ausführbaren Teilmodell assoziierten Metadatei, wenn gekoppelt mit anderen solchen Kombinationen, einen vorteilhaften Ausgangspunkt für das Erzeugen eines auf einem Testgerät ausführbaren Modells dar. Die Modifikationen, weiteren Merkmale und Effekte, die oben bezüglich des Verfahrens zum Erzeugen eines auf einem Testgerät ausführbaren Modells beschrieben sind, gelten für die genannte Kombination in analoger Weise.

Beispielhafte Ausführungsformen der Erfindung umfassen weiterhin ein Testgerät zum echtzeitfähigen Testen eines an das Testgerät angeschlossenen Steuergeräts, aufweisend eine Mehrzahl von Kombinationen, wie im vorhergehenden Absatz beschrieben. Die Modifikationen, weiteren Merkmale und Effekte, die oben bezüglich des Verfahrens zum Erzeugen eines auf einem Testgerät ausführbaren Modells beschrieben sind, gelten für das Testgerät zum echtzeitfähigen Testen eines an das Testgerät angeschlossenen Steuergeräts in analoger Weise.

In einer weiteren Ausführungsform wird das Verfahren zum Erzeugen eines auf einem Testgerät (2) ausführbaren Modells (6) eines technischen Systems verwendet, wobei das Testgerät und das ausführbare Modell zum echtzeitfähigen Steuern eines an das Testgerät angeschlossenen Geräts ausgebildet sind und wobei das ausführbare Modell aus einer Mehrzahl von miteinander kommunizierenden ausführbaren Teilmodellen (10, 12) aufgebaut ist, wobei jedes der ausführbaren Teilmodelle einen separaten Adressraum besitzt und/oder bei einer Steuerung eines an das Testgerät angeschlossenen Geräts auf einem separaten Prozessor oder separatem Prozessorkern ausgeführt wird, wobei das Verfahren die folgenden Schritte aufweist, welche nach dem Kompilieren von hochsprachlichen Teilmodellen in die ausführbaren Teilmodelle ausgeführt werden:
(a) für jedes der Mehrzahl der ausführbaren Teilmodelle, Identifizieren von Kommunikationseigenschaften des jeweiligen ausführbaren Teilmodells,
(b) Zugreifen auf Kommunikationsdefinitionen (16) für die Kommunikation zwischen den ausführbaren Teilmodellen,
(c) Konfigurieren von Kommunikationsschnittstellen (110, 112, 114, 128, 130, 132) der Mehrzahl der ausführbaren Teilmodelle auf Basis der Kommunikationseigenschaften der ausführbaren Teilmodelle und der Kommunikationsdefinitionen für die Kommunikation zwischen den ausführbaren Teilmodellen, und
(d) Einrichten mindestens einer echtzeitfähigen Kommunikationsverbindung (14) zwischen den ausführbaren Teilmodellen auf Basis der Kommunikationseigenschaften der ausführbaren Teilmodelle und der Kommunikationsdefinitionen für die Kommunikation zwischen den ausführbaren Teilmodellen.

In der letztgenannten Ausführungsform wird das Verfahren nicht im Rahmen einer HIL-Simulation, sondern im Rahmen eines Rapid-Control-Prototyping-Tests (RCP-Tests) angewendet. Das Rapid Control Prototyping (RCP) ist ein Entwicklungsschritt, der mehr am Anfang des Entwicklungsprozesses steht. Beim RCP kommt das Testgerät auf Seiten des Steuergeräts zum Einsatz. Das Testgerät enthält ein Modell des zu testenden bzw. des sich im Entwicklungsprozess befindlichen Steuergeräts. Aufgrund des frühen Entwicklungsstadiums ist das Modell des zu testenden Steuergeräts noch recht rudimentär im Vergleich zu dem späteren finalen Steuergerät. Auch ist normalerweise noch keine Hardware-Implementierung des Steuergeräts vorhanden, vielmehr ist das in dem Testgerät vorhandene Modell des zu testenden Steuergeräts ein Software-Modell. Das Testgerät kann über eine Eingabe/Ausgabe-Schnittstelle mit dem zu steuernden technischen System selbst oder mit dem bisher vorhandenen Steuergerät für das zu steuernde technische System verbunden werden. Im ersten Fall besteht eine direkte Verbindung zwischen dem zu testenden Steuergerät, in der Form eines Software-Modells, und dem gegenständlich vorhandenen, zu steuernden technischen System. Im zweiten Fall ist das bisher vorhandene Steuergerät das durch das RCP-Testgerät zu steuernde technische System. Diese Steuerung des bisher vorhandenen Steuergeräts führt zu einer Modifikation der Steuerverfahren des bisher vorhandenen Steuergeräts, wodurch neue Steuer-Funktionalität mittels des von außen angeschlossenen RCP-Testgeräts getestet werden können.

Als Gerät kommen z.B. Sensoren oder Aktoren in Frage oder komplexere Systeme wie z.B. ein vollständiger Motor oder ein beliebiges technisches System in einem Prüfstand.

Die Modifikationen, weiteren Merkmale und Effekte, die oben bezüglich des Verfahrens zum Erzeugen eines auf einem Testgerät ausführbaren Modells beschrieben sind, gelten für die letztgenannten Ausführungsform, bei der das Verfahren nicht im Rahmen einer HIL-Simulation, sondern im Rahmen eines Rapid-Control-Prototyping-Tests angewendet wird, in analoger Weise.

Sowohl Teilmodelle, ausführbare Modelle sowie Geräte können in der Form von virtuellen elektronischen Steuergeräten vorliegen. Unter virtuellem Steuergerät wird dabei ein (Teil-)Programmcode oder ein Algorithmus verstanden, der auf einem zu entwickelnden Steuergerät implementiert werden soll.

Weitere beispielhafte Ausführungsformen werden mit Bezug auf die beiliegenden Figuren beschrieben.
Fig. 1 zeigt ein Testgerät mit einem daran angeschlossenen, zu testenden Steuergerät in einem Blockdiagramm, wobei auf dem Testgerät ein Verfahren zum Erzeugen eines auf dem Testgerät ausführbaren Modells gemäß beispielhafter Ausführungsformen der Erfindung ausgeführt werden kann;
Fig. 2 zeigt ein durch ein Verfahren gemäß beispielhafter Ausführungsformen der Erfindung erzeugtes Modell eines technischen Systems in einem Blockdiagramm, wobei das Modell des technischen Systems zwei ausführbare Teilmodelle hat;
Fig. 3 zeigt die ausführbaren Teilmodelle der Fig. 2 und die zwischen den ausführbaren Teilmodellen bestehende Kommunikationsverbindung in größerem Detail;
Fig. 4 zeigt das Erzeugen eines auf einem Testgerät ausführbaren Modells gemäß beispielhafter Ausführungsformen der Erfindung in einem Ablaufdiagramm; und
Fig. 5 zeigt ein weiteres Beispiel von zwei ausführbaren Teilmodellen und deren Kommunikationsverbindung.

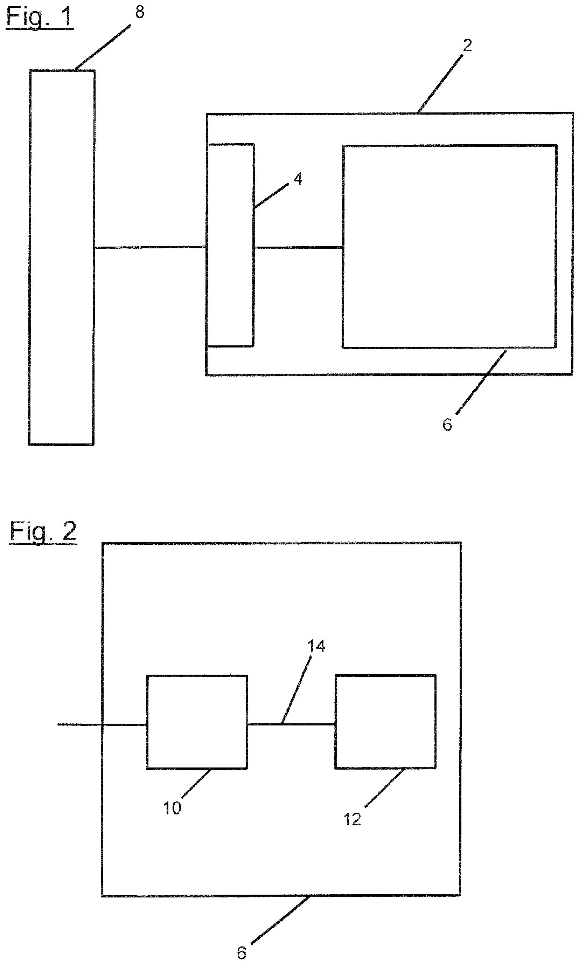

Fig. 1 zeigt ein Testgerät 2, welches im vorliegenden Fall ein HIL-Simulator 2 ist. Der HIL-Simulator 2 hat eine physikalische Schnittstelle 4, über die externe Geräte an den HIL-Simulator 2 anschließbar sind. In Fig. 1 ist ein Steuergerät 8 an die physikalische Schnittstelle 4 angeschlossen. In dem Beispiel von Fig. 1 ist das Steuergerät 8 ein Motorsteuergerät, das zum Steuern des Motors eines Kraftfahrzeugs eingerichtet ist. Der HIL-Simulator 2 ist zum Testen des Motorsteuergeräts 8 eingerichtet.

Der HIL-Simulator 2 beinhaltet ein Modell 6 eines technischen Systems. In dem Beispiel von Fig. 1 ist das Modell 6 ein Modell einer Kombination eines Motors und eines Getriebes. Das Modell 6 liegt als Software-Modell vor und kann mit der physikalischen Schnittstelle 4 Daten austauschen. So ergibt sich eine Datenverbindung zwischen dem Steuergerät 8 und dem Modell 6, wodurch die Interaktion dieser beiden Komponenten simuliert und getestet werden kann. Dabei übernimmt die physikalische Schnittstelle 4 den Übergang zwischen den von und zu dem Steuergerät übertragenen physikalischen Signalen und den innerhalb des HIL-Simulators 2 ausgetauschten logischen, d.h. Software-basierten, Signalen.

Der HIL-Simulator ist echtzeitfähig. Somit kann das Steuergerät 8 ohne weitere Anpassung, sprich in seiner später im Betrieb eingesetzten Konfiguration, getestet werden. Der HIL-Simulator 2 interagiert in derjenigen Geschwindigkeit mit dem Steuergerät 8, die ein gegenständlich vorhandenes technisches System, im vorliegenden Fall eine Kombination aus realem Motor und Getriebe eines Kraftfahrzeugs, hätte. Das bedeutet wiederum, dass das Verhalten des Modells 6 auch in mindestens dieser Geschwindigkeit berechnet wird. Das Modell 6 ist ein ausführbares Modell, d.h. das Modell 6 liegt in kompilierter Form vor und kann auf der Hardware des HIL-Simulators 2 ausgeführt werden.

Fig. 2 zeigt das Modell 6 des technischen Systems aus Fig. 1 in größerem Detail. Das Modell 6 hat zwei ausführbare Teilmodelle 10 und 12, nämlich ein erstes ausführbares Teilmodell 10 und ein zweites ausführbares Teilmodell 12. Das erste ausführbare Teilmodell 10 ist ein Modell des Motors, der von dem Motorsteuergerät 8 zu steuern ist. Das erste ausführbare Modell 10 ist mit der physikalischen Schnittstelle 4 verbunden und kann über diese mit dem Steuergerät 8 kommunizieren. Das zweite ausführbare Teilmodell 12 ist ein Modell des Getriebes des Kraftfahrzeugs. Zwischen dem ersten ausführbaren Teilmodell 10 und dem zweiten ausführbaren Teilmodell 12 besteht eine echtzeitfähige Kommunikationsverbindung 14. Das Erzeugen des Modells 6 aus dem ersten ausführbaren Teilmodell 10 und dem zweiten ausführbaren Teilmodell 12 durch Einrichten der echtzeitfähigen Kommunikationsverbindung 14 wird unten im Detail beschrieben.

Im vorliegenden Beispiel werden das erste Teilmodell 10 und das zweite Teilmodell 12 während der Simulation auf separaten Prozessoren ausgeführt. So können die Berechnungen für das erste Teilmodell 10 und das zweite Teilmodell 12 vollkommen parallel ausgeführt werden. Es ist auch möglich, dass das erste Teilmodell 10 und das zweite Teilmodell 12 auf demselben Prozessor, aber in separaten Prozessorkernen ausgeführt werden. Außerdem ist es möglich, dass das erste Teilmodell 10 und das zweite Teilmodell 12 unterschiedliche Adressräume besitzen, wobei sie auf demselben Prozessor oder auf unterschiedlichen Prozessoren ausgeführt werden.

Das Modell 6 wird als Modell eines zu steuernden technischen Systems angesehen. Dafür ist es unerheblich, dass lediglich das erste ausführbare Teilmodell 10 unmittelbar von dem Steuergerät 8 gesteuert wird. Das Steuergerät 8 hat über das erste ausführbare Teilmodell 10 Einfluss auf die Gesamtheit der Kombination von Motormodell und Getriebemodell. Das zweite ausführbare Teilmodell 12, d.h. das Getriebemodell, ist ein Modell der Umgebung des Motors und wird daher auch als Umgebungsmodell bezeichnet. Es wird betont, dass das unten beschrieben Verfahren zum Erzeugen eines auf einem Testgerät ausführbaren Modells nicht nur auf zu steuernde technische Systeme anwendbar ist, sondern auf jegliche Art von ausführbaren Modellen von technischen Systemen, die auf einem Testgerät ausgeführt werden. Dabei ist es für den Ablauf des Verfahrens unerheblich, ob die ausführbaren Modelle zu steuernde Komponenten enthalten oder nicht.

Zur möglichst klaren Illustration einer beispielhaften Ausführungsform der Erfindung sind lediglich das Motormodell 10 und das Getriebemodell 12 in Fig. 2 gezeigt. Es ist für den Fachmann jedoch ersichtlich, dass weitere ausführbare Teilmodelle in dem HIL-Simulator vorhanden sein können, aus denen das Modell 6 des technischen Systems, d.h. das Modell des technischen Gesamtsystems, erzeugt werden kann.

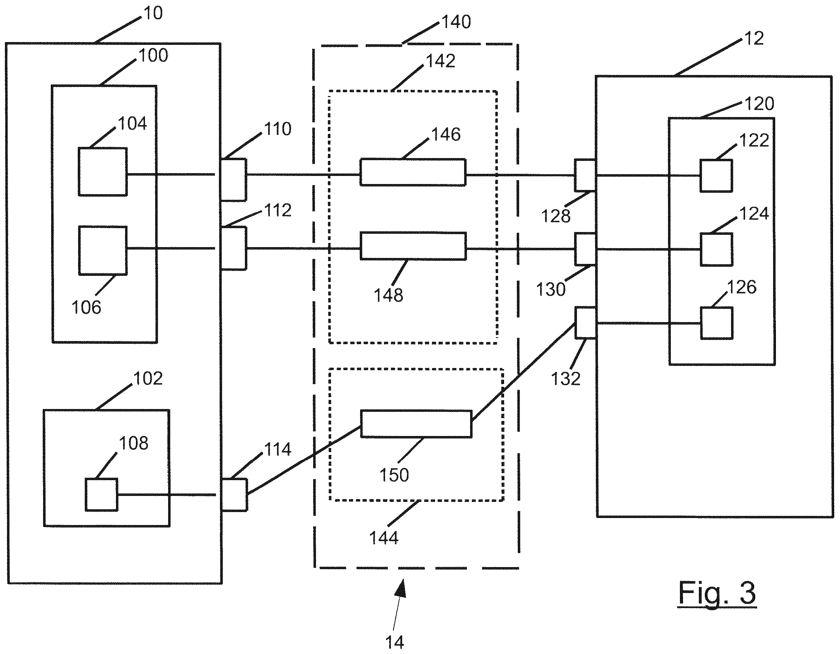

Fig. 3 zeigt das erste ausführbare Teilmodell 10 und das zweite ausführbare Teilmodell 12 in größerem Detail, wobei insbesondere auf die Kommunikationsverbindung 14 zwischen den Teilmodellen eingegangen wird. Das erste ausführbare Teilmodell 10 hat einen ersten bedingt auszuführenden Bestandteil 100 und einen zweiten bedingt auszuführenden Bestandteil 102. Der erste bedingt auszuführende Bestandteil 100 ist ein Modell eines Verbrennungsmotors. Der zweite bedingt auszuführende Bestandteil 102 ist ein Modell eines Elektromotors. Somit ist das erste ausführbare Teilmodell 10 ein Modell eines Hybrid-Motors. Der Begriff bedingt auszuführender Bestandteil betrifft eine Sub-Komponente eines ausführbaren Teilmodells. Das Wort bedingt bringt dabei zum Ausdruck, dass das Modell der entsprechenden Sub-Komponente nur in bestimmten Betriebssituationen ausgeführt wird, wie z.B. bei Zuschaltung des Elektromotors, oder das Verhalten nur auf bestimmte Ereignisse hin berechnet wird oder dass das Modell sonst von irgendwelchen Bedingungen abhängt. Im Einzelfall ist es auch möglich, dass ein bedingt auszuführender Bestandteil ständig ausgeführt wird. Der Begriff bringt jedoch zum Ausdruck, dass die Ausführung des Modells der entsprechenden Komponenten von einer oder mehreren Bedingungen anhängen kann.

Der erste bedingt auszuführende Bestandteil 100 hat eine erste Variable 104 und eine zweite Variable 106. Die erste Variable 104 ist die Drehzahl des Verbrennungsmotors. Die zweite Variable 106 ist das Drehmoment des Verbrennungsmotors. Der zweite bedingt auszuführende Bestandteil 102 hat eine dritte Variable 108. Die dritte Variable 108 ist das zusätzliche Drehmoment des Elektromotors.

Weiterhin hat das erste ausführbare Teilmodell 10 eine erste Kommunikationsschnittstelle 110, eine zweite Kommunikationsschnittstelle 112 und eine dritte Kommunikationsschnittstelle 114. Über diese Kommunikationsschnittstellen werden die erste Variable 104, die zweite Variable 106 und die dritte Variable 108 während der Simulation an das zweite ausführbare Teilmodell 12 übermittelt, wie unten im Detail beschrieben wird.

Das zweite ausführbare Teilmodell 12 hat einen dritten bedingt auszuführenden Bestandteil 120. Der dritte bedingt auszuführende Bestandteil 120 hat eine vierte Variable 122, eine fünfte Variable 124 und eine sechste Variable 126. Die vierte Variable 122 ist die Drehzahl des Verbrennungsmotors, die fünfte Variable 124 ist das Drehmoment des Verbrennungsmotors, und die sechste Variable 126 ist das zusätzliche Drehmoment des Elektromotors. Der dritte bedingt auszuführende Bestandteil 120 ist ein Modell des Getriebes, welches das Verhalten des Getriebes auf Basis der von dem Motor erhaltenen Werte für die Variablen modelliert. Weiterhin hat das zweite ausführbare Teilmodell 12 eine vierte Kommunikationsschnittstelle 128, eine fünfte Kommunikationsschnittstelle 130, und eine sechste Kommunikationsschnittstelle 132, über die die Daten von dem ausführbaren Teilmodell 10 empfangen werden und an den dritten bedingt auszuführenden Bestandteil 120 weitergegeben werden.

Von der ersten Kommunikationsschnittstelle 110, die mit der ersten Variable 104 verbunden ist, werden erste Daten 146 an die vierte Kommunikationsschnittstelle 128 übermittelt, die mit der vierten Variable 122 verbunden ist. Von der zweiten Kommunikationsschnittstelle 112, die mit der zweiten Variable 106 verbunden ist, werden zweite Daten 148 an die fünfte Kommunikationsschnittstelle 130 übermittelt, die mit der fünften Variable 124 verbunden ist. Von der dritten Kommunikationsschnittstelle 114, die mit dritten Variable 108 verbunden ist, werden dritte Daten 150 an die sechste Kommunikationsschnittstelle 132 übermittelt, die mit der sechsten Variable 126 verbunden ist.

Die ersten Daten 146 und die zweiten Daten 148 stammen von dem gleichen bedingt auszuführenden Bestandteil 100 und betreffen den gleichen Zeitpunkt in der simulierten Zeit. Daher sind die ersten Daten 146 und die zweiten Daten 148 in einen ersten Konsistenzpuffer 142 zusammengefasst. Die dritten Daten 150 stammen von einem anderen bedingt auszuführenden Bestandteil, nämlich von dem zweiten bedingt auszuführenden Bestandteil 102. Wie oben ausgeführt, wird der zweite bedingt auszuführende Bestandteil 102, welcher ein Modell eines Elektromotors ist, nur dann ausgeführt, wenn der Elektromotor zugeschaltet ist. Demzufolge liegen nicht immer dritte Daten 150 vor. Außerdem ist es möglich, dass die simulierte Zeit des zweiten bedingt auszuführenden Bestandteils 102 nicht exakt mit der simulierten Zeit des ersten bedingt auszuführenden Bestandteils 100 synchronisiert ist oder dass die Iterationsschritte der bedingt auszuführenden Bestandteile 100, 102 nicht gleich oft ausgeführt werden. Aus diesen Gründen sind die dritten Daten 150 in einem eigenen, zweiten Konsistenzpuffer 144 vorgesehen. Diese Aufteilung auf eigene Konsistenzpuffer bringt zum Ausdruck, dass perfekte Datenkonsistenz im Sinne der echtzeitfähigen Simulation zwischen den zwei Konsistenzpuffern 142 und 144 nicht unbedingt vorliegt. Im Allgemeinen betreffen Konsistenzpuffer Daten, die zusammen übertragen werden und zu dem gleichen Zeitpunkt der simulierten Zeit gehören. Durch die Aufteilung in Konsistenzpuffern wird eine bestmögliche Realisierung der Datenkonsistenz erreicht, da die bedingt ausgeführten Anteile asynchron getriggert werden können.

Der erste Konsistenzpuffer 142 und der zweite Konsistenzpuffer 144 sind in einem Kommunikationspaket 140 zusammengefasst, welches von dem ersten ausführbaren Teilmodell 10 an das zweite ausführbare Teilmodell 12 übermittelt wird. Der Begriff Kommunikationspaket betrifft die Übertragung einer Dateneinheit, die von dem ersten ausführbaren Teilmodell 10 als Sender an das zweite ausführbare Teilmodell 12 als Empfänger übermittelt wird. Die Gesamtheit der Ausbildung der Datenübermittlung wird als Kommunikationsverbindung 14 bezeichnet.

Die Empfangsart des zweiten ausführbaren Teilmodells 12 ist fortwährend, d.h. das zweite ausführbare Teilmodell 12 nimmt alle über die Kommunikationsverbindung 14 ankommenden Daten auf. Der dritte bedingt auszuführende Bestandteil 120 verarbeitet die ankommenden Daten, unabhängig davon ob sie sich von zuvor empfangenen Daten unterscheiden oder nicht. Dies macht im vorliegenden Fall insbesondere deshalb Sinn, weil es sein kann, das keine dritten Daten 150 übermittelt werden, sich die ersten Daten 146 und die zweiten Daten 148 aber im Laufe der Simulation ändern. Eine solche fortwährende Empfangsart wird auch als "non-blocking" bzw. asynchron beschrieben. Demgegenüber gibt es auch eine Ereignis-gesteuerte Empfangsart, bei der das empfangende ausführbare Teilmodell nur auf Änderungen in den übertragenen Daten reagiert. Solch eine Empfangsart wird auch als "blocking" bzw. synchron bezeichnet, weil sich nicht ändernde Daten vor deren Verarbeitung durch einen bedingt auszuführenden Bestandteil geblockt werden.

Es ist ersichtlich, dass die zwei ausführbaren Teilmodelle 10 und 12 neben der oben beschriebenen Datenübermittlung viele weitere Daten austauschen können. Dieser Datenaustausch kann in beide Richtungen vonstatten gehen. Lediglich auf Grund der Übersichtlichkeit der Erläuterungen der Kommunikationsverbindung 14 hat sich die Beschreibung auf die drei Variablen Drehzahl des Verbrennungsmotors, Drehmoment des Verbrennungsmotors und Drehmoment des Elektromotors beschränkt.

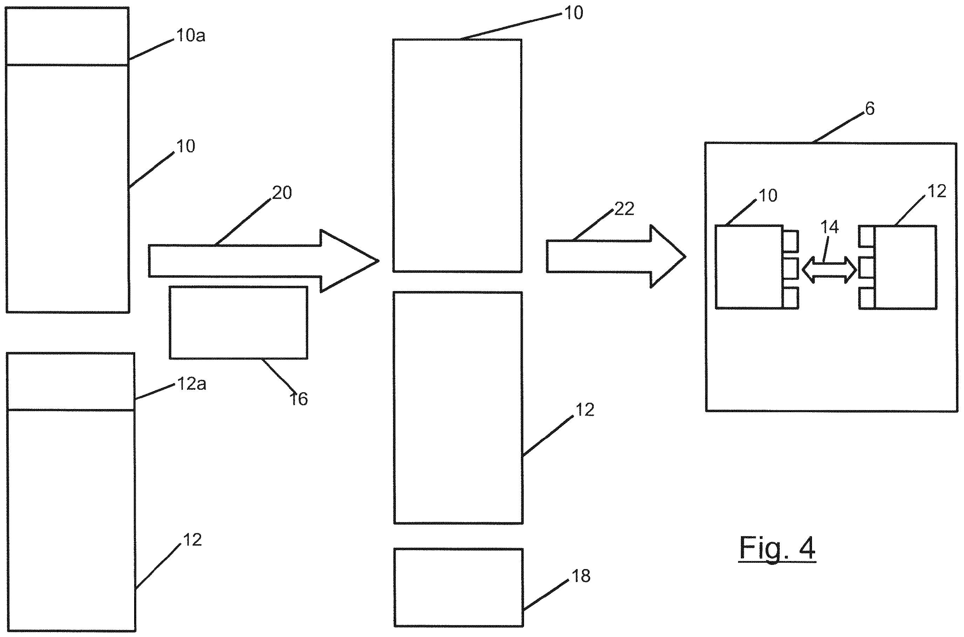

Fig. 4 illustriert ein Verfahren zum Erzeugen des ausführbaren Modells 6, wie oben beschrieben, gemäß einer beispielhaften Ausführungsform der Erfindung. Ausgangspunkt des Verfahrens sind das erste ausführbare Teilmodell 10 und das zweite ausführbare Teilmodell 12. Die beiden ausführbaren Teilmodelle sind jeweils mit einer Metadatei assoziiert. Insbesondere ist das erste ausführbare Teilmodell 10 mit einer ersten Metadatei 10a assoziiert. Das zweite ausführbare Teilmodell 12 ist mit einer zweiten Metadatei 12a assoziiert. Die erste und die zweite Metadatei 10a, 12a beinhalten Beschreibungen der Kommunikationseigenschaften des ersten ausführbaren Teilmodells 10 und des zweiten ausführbaren Teilmodells 12. Die erste Metadatei 10a beinhaltet für jede der zu kommunizierenden Variablen des ersten ausführbaren Teilmodells 10 die Kommunikationsrichtung, den Datentyp, die Datenbreite, und die Zuordnung zu einem bedingt auszuführenden Bestandteil des ersten ausführbaren Teilmodells 10. Ebenso beinhaltet die zweite Metadatei 12a für jede der zu kommunizierenden Variablen die Kommunikationsrichtung, den Datentyp, die Datenbreite, und die Zuordnung zu einem bedingt auszuführenden Bestandteil des zweiten ausführbaren Teilmodells 12. Somit enthalten die Metadateien 10a und 12a die lokal für die Teilmodelle relevanten Informationen für die Bereitstellung einer Kommunikation zwischen verschiedenen Teilmodellen.

In einem ersten Verarbeitungsschritt 20 werden die erste Metadatei 10a und die zweite Metadatei 12a mit Kommunikationsdefinitionen 16 gekoppelt. In den Kommunikationsdefinitionen 16 wird festgelegt, welche Teilmodelle miteinander kommunizieren sollen, welche Daten in Kommunikationspakete gebündelt werden sollen und auf welche Empfangsart die Daten empfangen werden sollen. Im vorliegenden Fall sind die Kommunikationsdefinitionen 16 eine Datei, die eine Beschreibung der folgenden Information enthält: das erste ausführbare Teilmodell 10 kommuniziert mit dem zweiten ausführbaren Teilmodell 12; alle von dem ersten ausführbaren Teilmodell 10 an das zweite ausführbare Teilmodell 12 zu übertragenden Daten werden in einem Kommunikationspaket gebündelt; das zweite ausführbare Teilmodell 12 empfängt die Daten fortwährend.

Aus der Kombination der Informationen der ersten Metadatei 10a, der Informationen der zweiten Metadatei 12a und der Kommunikationseigenschaften 16 wird eine Zuordnungs-Datei 18 erstellt, die eine Beschreibung der später zu konfigurierenden Kommunikationsschnittstellen und der später einzurichtenden Kommunikationsverbindung zwischen den Teilmodellen enthält. Die Zuordnungs-Datei 18, auch als Mapping File bezeichnet, hat ein definiertes Format, das die gesamte, später für die Verknüpfung der zwei ausführbaren Teilmodelle 10, 12 nötige Information beinhaltet.

In einem zweiten Verarbeitungsschritt 22 wird aus dem ersten ausführbaren Teilmodell 10, dem zweiten ausführbaren Teilmodell 12, und der Zuordnungs-Datei 18 das oben beschriebene Modell 6 erzeugt, welches das erste ausführbare Teilmodell 10, das zweite ausführbare Teilmodell 12, die jeweiligen Kommunikationsschnittstellen und die echtzeitfähige Kommunikationsverbindung 14 enthält. Die Information für das Konfigurieren der Kommunikationsschnittstellen und das Einrichten der echtzeitfähigen Kommunikationsverbindung 14 stammt aus der Zuordnungs-Datei 18. Während der Simulation verläuft die Kommunikation zwischen dem ersten ausführbaren Teilmodell 10 und dem zweiten ausführbaren Teilmodells 12 wie oben bezüglich Fig. 3 beschrieben.

Der Zwischenschritt über die Zuordnungs-Datei 18 ist optional. Es ist auch möglich, dass das Modell 6 direkt aus den Informationen der ersten Metadatei 10a, der zweiten Metadatei 12a und den Kommunikationsdefinitionen 16 erzeugt wird. Weiterhin stellen die erste Metadatei 10a und die zweite Metadatei 12a nur eine von vielen Möglichkeiten dar, wie die Information bezüglich der zu kommunizierenden Variablen der ausführbaren Teilmodelle bereitgestellt werden kann. Die Kombination eines ausführbaren Teilmodells und einer damit assoziierten Metadatei kann im Zuge des Kompilierens eines hochsprachlichen Teilmodells erzeugt werden.

Der Begriff hochsprachliches Teilmodell bedeutet hier, dass das Teilmodell in einer hochsprachlichen Programmiersprache vorliegt. Eine hochsprachliche Programmiersprache - auch bekannt als "höhere Programmiersprache"- ist dabei eine Programmiersprache zur Abfassung eines Computerprogramms, die in Abstraktion und Komplexität von der Ebene der Maschinensprachen deutlich entfernt ist. Beispielhafte hochsprachliche Programmiersprachen sind C, C++, Java oder auch Skriptsprachen wie Python, Javascript, M-Code (MATLAB-code) oder auch grafische Programmiersprachen wie Simulink und Labview.

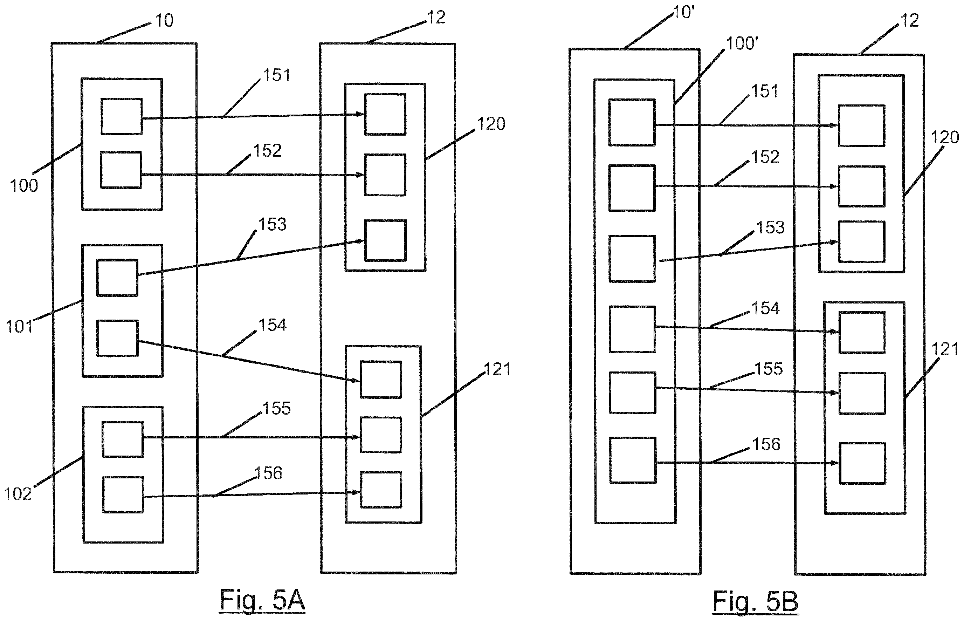

Fig. 5 zeigt ein weiteres Beispiel für die Kommunikation zwischen zwei ausführbaren Teilmodellen. Insbesondere wird anhand von Fig. 5 verdeutlicht, wie durch das späte Einrichten von Kommunikationsverbindungen zwischen den Teilmodellen der Austausch bereits kompilierter, ausführbarer Teilmodelle ermöglicht wird. Während Fig. 5A die Situation vor dem Austausch eines ausführbaren Teilmodells zeigt, wird in Fig. 5B die Situation nach dem Austausch des ausführbaren Teilmodells gezeigt.

Fig. 5A zeigt ein erstes ausführbares Teilmodell 10 und ein zweites ausführbares Teilmodell 12. Das erste ausführbare Teilmodell 10 hat einen ersten bedingt auszuführenden Bestandteil 100, einen zweiten bedingt auszuführenden Bestandteil 101 und einen dritten bedingt auszuführenden Bestandteil 102. Das zweite ausführbare Teilmodell 12 hat einen vierten bedingt auszuführenden Bestandteil 120 und einen fünften bedingt auszuführenden Bestandteil 121.

Von dem ersten bedingt auszuführenden Bestandteil 100 werden erste Daten 151 und zweite Daten 152 an den vierten bedingt auszuführenden Bestandteil 120 übermittelt. Die ersten Daten 151 und die zweiten Daten 152 sind in einem ersten Konsistenzpuffer organisiert. Von dem zweiten bedingt auszuführenden Bestandteil 101 werden dritte Daten an den vierten bedingt auszuführenden Bestandteil 120 übermittelt. Die dritten Daten 153 bilden einen eigenen, zweiten Konsistenzpuffer. Der erste Konsistenzpuffer und der zweiten Konsistenzpuffer werden zusammen als Datenpaket übermittelt.

Von dem zweiten bedingt auszuführenden Bestandteil 101 werden vierte Daten 154 an den fünften bedingt auszuführenden Bestandteil 121 übermittelt. Die vierten Daten 154 bilden einen eigenen, dritten Konsistenzpuffer. Von dem dritten bedingt auszuführenden Bestandteil 102 werden fünfte Daten 155 und sechste Daten 156 an den fünften bedingt auszuführenden Bestandteil 121 übermittelt. Die fünften Daten 155 und sechsten Daten 156 bilden einen vierten Konsistenzpuffer. Der dritte Konsistenzpuffer und der vierte Konsistenzpuffer werden zusammen in einem zweiten Kommunikationspaket übermittelt.

Bezüglich genauerer Details der Kommunikation, insbesondere bezüglich der Kommunikationsschnittstellen des ersten ausführbaren Teilmodells 10 und des zweiten ausführbaren Teilmodells 12, wird auf obige Beschreibung der Fig. 3 verwiesen. Die dortigen Ausführungen gelten analog für Fig. 5.

In Fig. 5B ist nun die Situation gezeigt, dass das erste ausführbare Teilmodell 10 durch ein modifiziertes erstes ausführbares Teilmodell 10' ersetzt worden ist. Das modifizierte erste ausführbare Teilmodell 10' zeichnet sich dadurch aus, das es nur einen ersten bedingt auszuführenden Bestandteil 100' enthält. Dieser erste bedingt auszuführende Bestandteil 100' übermittelt alle oben genannten Daten, d.h. die ersten Daten 151, die zweiten Daten 152, die dritten Daten 153, die vierten Daten 154, die fünften Daten 155 und die sechsten 156. Da die Daten nun alle von einem bedingt auszuführendem Bestandteil stammen, werden diese mit nur noch zwei Konsistenzpuffern übertragen. Insbesondere bilden die ersten Daten 151, die zweiten Daten 152 und die dritten Daten 153 einen ersten Konsistenzpuffer, während die vierten Daten 154, die fünften Daten 155 und die sechsten Daten 156 einen zweiten Konsistenzpuffer bilden. Die Daten eines jeden Konsistenzpuffers sind in einem eigenen Datenpaket organisiert.

Aus dem Vergleich von Fig. 5A und Fig. 5B wird klar, dass die Kommunikation zwischen dem ersten ausführbaren Teilmodell 10 und dem zweiten ausführbaren Teilmodell 12, insbesondere die Kommunikationsschnittstellen des ersten ausführbaren Teilmodells 10 und die echtzeitfähige Kommunikationsverbindung zwischen den Teilmodellen, anders aufgebaut sind. Die Kommunikationsschnittstellen und die echtzeitfähige Kommunikationsverbindung sind an die geänderte Ausführungsform des ersten ausführbaren Teilmodells 10 angepasst. Es wird somit deutlich, dass das Verfahren zum Erzeugen eines ausführbaren Modells gemäß beispielhaften Ausführungsformen der Erfindung den Austausch fertig kompilierter, ausführbarer Teilmodelle ermöglicht, wobei die Kommunikation zwischen verschiedenen Teilmodellen darauf angepasst wird und ein Neu-Kompilieren der Teilmodelle nicht erforderlich ist. Außerdem ermöglicht das Verfahren zum Erzeugen eines ausführbaren Modells gemäß beispielhaften Ausführungsformen der Erfindung eine Änderung der gewünschten Kommunikation mittels der Kommunikationsdefinitionen nach dem Kompilieren der Teilmodelle.

Obwohl die Erfindung mit Bezug auf beispielhafte Ausführungsformen beschrieben worden ist, ist es für einen Fachmann ersichtlich, dass verschiedene Änderungen vorgenommen und Äquivalente verwendet werden können, ohne den Bereich der Erfindung zu verlassen. Die Erfindung soll nicht durch die beschriebenen spezifischen Ausführungsformen beschränkt sein. Vielmehr enthält sie alle Ausführungsformen, die unter die angehängten Patentansprüche fallen.

## Patentansprüche

1. Verfahren zum Erzeugen eines auf einem Testgerät (2) ausführbaren Modells (6) eines technischen Systems, wobei das Testgerät und das ausführbare Modell zum echtzeitfähigen Testen eines an das Testgerät angeschlossenen Steuergeräts (8) ausgebildet sind und wobei das ausführbare Modell aus einer Mehrzahl von miteinander kommunizierenden ausführbaren Teilmodellen (10, 12) aufgebaut ist, wobei jedes der ausführbaren Teilmodelle einen separaten Adressraum besitzt und/oder bei Durchführung eines Tests eines an das Testgerät angeschlossenen Steuergeräts auf einem separaten Prozessor oder separatem Prozessorkern ausgeführt wird,
**dadurch gekennzeichnet, dass** das Verfahren die folgenden Schritte aufweist, welche nach dem Kompilieren von hochsprachlichen Teilmodellen in die ausführbaren Teilmodelle ausgeführt werden:
(a) für jedes der Mehrzahl der ausführbaren Teilmodelle, Identifizieren von Kommunikationseigenschaften des jeweiligen ausführbaren Teilmodells, wobei der Schritt des Identifizierens der Kommunikationseigenschaften des jeweiligen ausführbaren Teilmodells das Analysieren einer mit dem jeweiligen ausführbaren Teilmodell (10, 12) assoziierten Metadatei (10a, 12a) beinhaltet,
(b) Zugreifen auf Kommunikationsdefinitionen (16) für die Kommunikation zwischen den ausführbaren Teilmodellen,
(c) Konfigurieren von Kommunikationsschnittstellen (110, 112, 114, 128, 130, 132) der Mehrzahl der ausführbaren Teilmodelle auf Basis der Kommunikationseigenschaften der ausführbaren Teilmodelle und der Kommunikationsdefinitionen für die Kommunikation zwischen den ausführbaren Teilmodellen, und
(d) Einrichten mindestens einer echtzeitfähigen Kommunikationsverbindung (14) zwischen den ausführbaren Teilmodellen auf Basis der Kommunikationseigenschaften der ausführbaren Teilmodelle und der Kommunikationsdefinitionen für die Kommunikation zwischen den ausführbaren Teilmodellen.

2. Verfahren nach Anspruch 1, weiterhin aufweisend den Schritt:
Erstellen von mindestens einem ausführbaren Teilmodell (10, 12) durch Kompilieren und Erzeugen von mindestens einer Metadatei (10a, 12a), assoziiert mit dem mindestens einen ausführbaren Teilmodell, im Zuge des Kompilierens.

3. Verfahren nach einem der vorhergehenden Ansprüche, wobei der Schritt des Zugreifens auf Kommunikationsdefinitionen (16) für die Kommunikation zwischen den ausführbaren Teilmodellen (10, 12) das Empfangen mindestens einer Benutzereingabe von Kommunikationsdefinitionen beinhaltet.

4. Verfahren nach einem der vorhergehenden Ansprüche, wobei das auf dem Testgerät (2) ausführbare Modell (6) des technischen Systems ein Modell eines zu steuernden technischen Systems ist.

5. Verfahren nach einem der vorhergehenden Ansprüche, wobei die mindestens eine echtzeitfähige Kommunikationsverbindung (14) zwischen den ausführbaren Teilmodellen für eine konsistente Datenübertragung mittels Konsistenzpuffern (142, 144) und Kommunikationspaketen (140) eingerichtet ist.

6. Verfahren nach einem der vorhergehenden Ansprüche, wobei jede Kommunikationsschnittstelle der Mehrzahl der ausführbaren Teilmodelle (10, 12) bezüglich mindestens eines der folgenden Parameter konfiguriert wird:
Kommunikationsrichtung,
Datentyp,
Datenbreite, und
Zuordnung zu einem bedingt auszuführenden Bestandteil des Teilmodells.

7. Verfahren nach einem der vorhergehenden Ansprüche, wobei die Kommunikationsdefinitionen (16) für mindestens eine Instanz einer Kommunikation zwischen den ausführbaren Teilmodellen (10, 12) mindestens einen der folgenden Parameter umfassen:
Festlegung von mindestens zwei miteinander kommunizierenden ausführbaren Teilmodellen,
Bündelung von Kommunikationsdaten und/oder von Kommunikationsempfängern in Kommunikationspaketen, und
Definition der Empfangsart, insbesondere Unterscheidung zwischen fortwährender und Ereignis-gesteuerter Empfangsart.

8. Verfahren nach einem der vorhergehenden Ansprüche, wobei die Schritte (c) und (d) zur Laufzeit eines Tests eines an das Testgerät (2) angeschlossenen Steuergeräts (8), insbesondere während einer Initialisierungsphase des Tests eines an das Testgerät angeschlossenen Steuergeräts, durchgeführt werden.

9. Verfahren nach einem der vorhergehenden Ansprüche, wobei die Schritte (c) und (d) aufweisen:
Erstellen einer Zuordnungs-Datei (18) auf Basis der Kommunikationseigenschaften der ausführbaren Teilmodelle und der Kommunikationsdefinitionen (16) für die Kommunikation zwischen den ausführbaren Teilmodellen (10, 12), wobei die Zuordnungs-Datei Teilmodell-interne Informationen und Informationen für die Zwischen-Teilmodell-Kommunikation beinhaltet, und
Konfigurieren der Kommunikationsschnittstellen (110, 112, 114, 128, 130, 132) der Mehrzahl der ausführbaren Teilmodelle sowie Einrichten der mindestens einen echtzeitfähigen Kommunikationsverbindung (14) zwischen den ausführbaren Teilmodellen auf Basis der Zuordnungs-Datei.

10. Verfahren nach Anspruch 9, wobei die Zuordnungs-Datei (18) für die als Empfänger fungierenden ausführbaren Teilmodelle eine Bestimmung der zu empfangenden Kommunikationspakete aufweist.

11. Verfahren nach Anspruch 9 oder 10, wobei die Zuordnungs-Datei (18) für die als Sender fungierenden ausführbaren Teilmodelle eine Bestimmung der gemeinsam zu übertragenden Datenblöcke aufweist.

12. Verfahren nach Anspruch 11, wobei die gemeinsam zu übertragenden Datenblöcke bezüglich des echtzeitfähigen Testens konsistente Daten beinhalten.

13. Kombination von
einem ausführbaren Teilmodell (10) eines auf einem Testgerät (2) ausführbaren, nach Anspruch 1 erzeugten,Modells (6) eines technischen Systems und
einer mit dem ausführbaren Teilmodell assoziierten Metadatei (10a), welche Kommunikationseigenschaften des ausführbaren Teilmodells beinhaltet,
wobei, bei Vorliegen von mindestens einem weiteren ausführbaren Teilmodell (12) und auf Basis von Kommunikationsdefinitionen (16) für die Kommunikation zwischen dem ausführbaren Teilmodell (10) und dem weiteren ausführbaren Teilmodell (12), eine echtzeitfähige Kommunikationsverbindung (14) für das ausführbare Teilmodell gemäß den Kommunikationseigenschaften der Metadatei herstellbar ist.

14. Testgerät (2) zum echtzeitfähigen Testen eines an das Testgerät angeschlossenen Steuergeräts (8), aufweisend eine Mehrzahl von Kombinationen gemäß Anspruch 13.

15. Verfahren zum Erzeugen eines auf einem RCP-Testgerät (2) ausführbaren Modells (6) eines technischen Systems, wobei das RCP-Testgerät und das ausführbare Modell zum echtzeitfähigen Steuern eines an das RCP-Testgerät angeschlossenen Geräts ausgebildet sind und wobei das ausführbare Modell aus einer Mehrzahl von miteinander kommunizierenden ausführbaren Teilmodellen (10, 12) aufgebaut ist, wobei jedes der ausführbaren Teilmodelle einen separaten Adressraum besitzt und/oder bei Durchführung einer Steuerung eines an das RCP-Testgerät angeschlossenen Geräts auf einem separaten Prozessor oder separatem Prozessorkern ausgeführt wird,
**dadurch gekennzeichnet, dass** das Verfahren die folgenden Schritte aufweist, welche nach dem Kompilieren von hochsprachlichen Teilmodellen in die ausführbaren Teilmodelle ausgeführt werden:
(a) für jedes der Mehrzahl der ausführbaren Teilmodelle, Identifizieren von Kommunikationseigenschaften des jeweiligen ausführbaren Teilmodells, wobei der Schritt des Identifizierens der Kommunikationseigenschaften des jeweiligen ausführbaren Teilmodells das Analysieren einer mit dem jeweiligen ausführbaren Teilmodell (10, 12) assoziierten Metadatei (10a, 12a) beinhaltet,
(b) Zugreifen auf Kommunikationsdefinitionen (16) für die Kommunikation zwischen den ausführbaren Teilmodellen,
(c) Konfigurieren von Kommunikationsschnittstellen (110, 112, 114, 128, 130, 132) der Mehrzahl der ausführbaren Teilmodelle auf Basis der Kommunikationseigenschaften der ausführbaren Teilmodelle und der Kommunikationsdefinitionen für die Kommunikation zwischen den ausführbaren Teilmodellen, und
(d) Einrichten mindestens einer echtzeitfähigen Kommunikationsverbindung (14) zwischen den ausführbaren Teilmodellen auf Basis der Kommunikationseigenschaften der ausführbaren Teilmodelle und der Kommunikationsdefinitionen für die Kommunikation zwischen den ausführbaren Teilmodellen.

## Claims

1. Method for generating a model (6) of a technical system which can be executed on a test device (2), wherein the test device and the executable model are designed for real-time testing of a control device (8) connected to the test device, and wherein the executable model is constructed from a plurality of executable sub-models (10, 12) which communicate with one another, each of the executable submodels having a separate address space and/or being executed on a separate processor or separate processor core when a test of a control unit connected to the test unit is performed, **characterized in that** the method comprises the following steps, which are executed after compiling high-level language submodels into the executable submodels:
(a) for each of the plurality of executable submodels, identifying communication properties of the respective executable submodel, wherein the step of identifying the communication properties of the respective executable submodel includes analyzing a metafile (10a, 12a) associated with the respective executable submodel (10, 12),
(b) accessing communication definitions (16) for communication between the executable submodels,
(c) configuring communication interfaces (110, 112, 114, 128, 130, 132) of the plurality of executable submodels based on the communication properties for communication between the executable submodels,
(d) establishing at least one real-time capable communication link (14) between the executable submodels based on the communication characteristics of the executable submodels and the communication definitions for the communication between the executable submodels.

2. A method according to claim 1, further comprising the step of: creating at least one executable submodel (10, 12) by compiling and generating at least one metafile (10a, 12a) associated with the at least one executable submodel in the course of compiling.

3. A method according to any of the preceding claims, wherein the step of accessing communication definitions (16) for communication between the executable submodels (10, 12) includes receiving at least one user input of communication definitions.

4. Method according to any of the preceding claims, wherein the model (6) of the technical system executable on the test device (2) is a model of a technical system to be controlled.

5. Method according to any of the preceding claims, wherein the at least one real-time capable communication link (14) between the executable submodels is set up for consistent data transmission by means of consistency buffers (142, 144) and communication packets (140).

6. A method according to any of the preceding claims, wherein each communication interface of the plurality of executable submodels (10, 12) is configured with respect to at least one of the following parameters: communication direction, data type, data width, and assignment to a conditionally executable component of the submodel.

7. Method according to any of the preceding claims, wherein the communication definitions (16) for at least one instance of a communication between the executable submodels (10, 12) comprise at least one of the following parameters: determination of at least two executable submodels communicating with one another, bundling of communication data and/or of communication receivers into communication packets, and definition of the reception mode, in particular differentiation between continuous and event-controlled reception mode.

8. Method according to any of the preceding claims, wherein steps (c) and (d) are carried out at the run-time of a test of a control unit (8) connected to the test device (2), in particular during an initialization phase of the test of a control unit connected to the test device.

9. A method according to any of the preceding claims, wherein steps (c) and (d) comprise creating a mapping file (18) based on the communication characteristics of the executable submodels and the communication definitions (16) for communication between the executable submodels (10, 12), the mapping file including submodel-internal information and information for inter-submodel communication; and configuring the communication interfaces (110, 112, 114, 128, 130, 132) of the plurality of executable submodels and establishing the at least one real-time capable communication link (14) between the executable submodels based on the mapping file.

10. Method according to claim 9, wherein the mapping file (18) for the executable submodels acting as receivers comprises a determination of the communication packets to be received.

11. Method according to claim 9 or 10, wherein the mapping file (18) for the executable submodels acting as transmitters has a determination of the data blocks to be transmitted together.

12. Method according to claim 11, wherein the data blocks to be transmitted together contain consistent data with respect to real-time testing.

13. A combination of an executable submodel (10) of a model (6) of a technical system executable on a test device (2) generated according to claim 1 and a metafile (10a) associated with the executable submodel, where the metafile contains communication properties of the executable submodel, and wherein, in the presence of at least one further executable submodel (12) and on the basis of communication definitions (16) for the communication between the executable submodel (10) and the further executable submodel (12), a real-time capable communication link (14) can be established for the executable submodel in accordance with the communication properties of the metafile.

14. A test device (2) for real-time testing of a control unit (8) connected to the test device, comprising a plurality of combinations according to claim 13.

15. Method for generating a model (6) of a technical system which can be executed on an RCP test device (2), wherein the RCP test device and the executable model are designed for real-time capable control of a device connected to the RCP test device, and wherein the executable model is constructed from a plurality of executable sub-models (10, 12) communicating with one another, wherein each of the executable submodels has a separate address space and/or is executed on a separate processor or separate processor core when performing control of a device connected to the RCP test equipment, **characterized in that** the method comprises the following steps, which are performed after compiling high-level language submodels into the executable submodels: (a) for each of the plurality of executable submodels, identifying communication properties of the respective executable submodel, wherein the step of identifying the communication properties of the respective executable submodel includes analyzing a metafile (10a, 12a) associated with the respective executable submodel (10, 12), (b) accessing communication definitions (16) for communication between the executable submodels, (c) configuring communication interfaces (110, 112, 114, 128, 130, 132) of the plurality of executable submodels based on the communication properties for communication between the executable submodels, (d) establishing at least one real-time capable communication link (14) between the executable submodels based on the communication characteristics of the executable submodels and the communication definitions for communication between the executable submodels.

## Revendications

1. Procédé pour générer un modèle (6) d'un système technique exécutable sur un appareil de test (2), dans lequel l'appareil de test et le modèle exécutable se présentent sous une forme pour tester avec aptitude temps réel un appareil de commande (8) connecté à l'appareil de test, dans lequel le modèle exécutable est constitué d'une pluralité de modèles partiels exécutables (10, 12) communiquant les uns avec les autres, et dans lequel chacun des modèles partiels exécutables possède un espace d'adressage séparé et/ou est exécuté sur un processeur séparé ou un cœur de processeur séparé lors de l'exécution d'un test d'un appareil de commande connecté à l'appareil de test,
**caractérisé en ce que** le procédé comprend les étapes suivantes, qui sont exécutées après la compilation de modèles partiels de langage de haut niveau dans les modèles partiels exécutables :
(a) pour chacun de la pluralité des modèles partiels exécutables, identifier des propriétés de communication du modèle partiel exécutable respectif, sachant que l'étape d'identification des propriétés de communication du modèle partiel exécutable respectif comprend l'analyse d'un métafichier (10a, 12a) associé au modèle partiel exécutable (10, 12) respectif,
(b) accéder à des définitions de communication (16) pour la communication entre les modèles partiels exécutables,
(c) configurer des interfaces de communication (110, 112, 114, 128, 130, 132) de la pluralité de modèles partiels exécutables sur la base des propriétés de communication des modèles partiels exécutables et des définitions de communication pour la communication entre les modèles partiels exécutables, et
(d) établir au moins une liaison de communication (14) à aptitude temps réel entre les modèles partiels exécutables sur la base des propriétés de communication des modèles partiels exécutables et des définitions de communication pour la communication entre les modèles partiels exécutables.

2. Procédé selon la revendication 1, comprenant en outre l'étape suivante :
Créer, au cours de la compilation, au moins un modèle partiel exécutable (10, 12) par compilation et génération d'au moins un métafichier (10a, 12a) associé audit, au moins un, modèle partiel exécutable.

3. Procédé selon l'une quelconque des revendications précédentes, dans lequel l'étape d'accès aux définitions de communication (16) pour la communication entre les modèles partiels exécutables (10, 12) comprend la réception d'au moins une entrée utilisateur de définitions de communication.

4. Procédé selon l'une quelconque des revendications précédentes, dans lequel le modèle (6) du système technique exécutable sur l'appareil de test (2) est un modèle d'un système technique à commander.

5. Procédé selon l'une quelconque des revendications précédentes, dans lequel la, au moins une, liaison de communication (14) à aptitude temps réel entre les modèles partiels exécutables est configurée pour une transmission de données cohérente au moyen de tampons de cohérence (142, 144) et de paquets de communication (140).

6. Procédé selon l'une quelconque des revendications précédentes, dans lequel chaque interface de communication de la pluralité de modèles partiels exécutables (10, 12) est configurée par rapport à au moins l'un des paramètres suivants :
sens de la communication,
type de données,
largeur de données et
affectation à un composant conditionnellement exécutable du sous-modèle.

7. Procédé selon l'une quelconque des revendications précédentes, dans lequel les définitions de communication (16) pour au moins une instance de communication entre les modèles partiels exécutables (10, 12) comprennent au moins l'un des paramètres suivants :
détermination d'au moins deux modèles partiels exécutables communiquant l'un avec l'autre,
groupage des données de communication et/ou des récepteurs de communication dans des paquets de communication, et
définition du mode de réception, en particulier distinction entre le mode de réception permanent et le mode de réception piloté par événement.

8. Procédé selon l'une quelconque des revendications précédentes, dans lequel les étapes (c) et (d) sont exécutées pendant la durée d'exécution d'un test d'un appareil de commande (8) connecté à l'appareil de test (2), en particulier pendant une phase d'initialisation du test d'un appareil de commande connecté à l'appareil de test.

9. Procédé selon l'une quelconque des revendications précédentes, dans lequel les étapes (c) et (d) comprennent :
créer un fichier d'affectation (18) sur la base des propriétés de communication des modèles partiels exécutables et des définitions de communication (16) pour la communication entre les modèles partiels exécutables (10, 12), sachant que le fichier d'affectation contient des informations internes aux modèles partiels et des informations pour la communication entre les sous-modèles, et
configurer les interfaces de communication (110, 112, 114, 128, 130, 132) de la pluralité de modèles partiels exécutables ainsi qu'établir l'au moins une liaison de communication (14) à aptitude temps réel entre les modèles partiels exécutables sur la base du fichier d'affectation.

10. Procédé selon la revendication 9, dans lequel le fichier d'affectation (18) pour les modèles partiels exécutables agissant en tant que récepteurs comprend une détermination des paquets de communication à recevoir.

11. Procédé selon la revendication 9 ou 10, dans lequel le fichier d'affectation (18) pour les modèles partiels exécutables agissant en tant qu'émetteurs comprend une détermination des blocs de données à transmettre en commun.

12. Procédé selon la revendication 11, dans lequel les blocs de données à transmettre en commun comprennent des données cohérentes par rapport aux tests à aptitude temps réel.

13. Combinaison
d'un modèle partiel exécutable (10) d'un modèle (6) d'un système technique exécutable sur un appareil de test (2) et généré selon la revendication 1, et
d'un métafichier (10a) associé au modèle partiel exécutable, qui contient des propriétés de communication du modèle partiel exécutable,
dans laquelle, en présence d'au moins un modèle partiel exécutable (12) supplémentaire et sur la base de définitions de communication (16) pour la communication entre le modèle partiel exécutable (10) et le modèle partiel exécutable (12) supplémentaire, une liaison de communication (14) à aptitude temps réel peut être établie pour le modèle partiel exécutable conformément aux propriétés de communication du métafichier.

14. Appareil de test (2) pour tester avec aptitude temps réel un appareil de commande (8) connecté à l'appareil de test, comprenant une pluralité de combinaisons selon la revendication 13.

15. Procédé pour générer un modèle (6) d'un système technique exécutable sur un appareil de test RCP (2), dans lequel l'appareil de test RCP et le modèle exécutable se présentent sous une forme pour commander avec aptitude temps réel un appareil connecté à l'appareil de test RCP, dans lequel le modèle exécutable est constitué d'une pluralité de modèles partiels exécutables (10, 12) communiquant les uns avec les autres, et dans lequel chacun des modèles partiels exécutables possède un espace d'adressage séparé et/ou est exécuté sur un processeur séparé ou un cœur de processeur séparé lors de l'exécution d'une commande d'un appareil connecté à l'appareil de test RCP,
**caractérisé en ce que** le procédé comprend les étapes suivantes, qui sont exécutées après la compilation de modèles partiels de langage de haut niveau dans les modèles partiels exécutables :
(a) pour chacun de la pluralité des modèles partiels exécutables, identifier des propriétés de communication du modèle partiel exécutable respectif, sachant que l'étape d'identification des propriétés de communication du modèle partiel exécutable respectif comprend l'analyse d'un métafichier (10a, 12a) associé au modèle partiel exécutable (10, 12) respectif,
(b) accéder à des définitions de communication (16) pour la communication entre les modèles partiels exécutables,
(c) configurer des interfaces de communication (110, 112, 114, 128, 130, 132) de la pluralité de modèles partiels exécutables sur la base des propriétés de communication des modèles partiels exécutables et des définitions de communication pour la communication entre les modèles partiels exécutables, et
(d) établir au moins une liaison de communication (14) à aptitude temps réel entre les modèles partiels exécutables sur la base des propriétés de communication des modèles partiels exécutables et des définitions de communication pour la communication entre les modèles partiels exécutables.
